Europäisches Patentamt

European Patent Office

Office européen des brevets

(19)

(11) Publication number: **0 106 500 B1**

(12) **EUROPEAN PATENT SPECIFICATION**

(45) Date of publication of patent specification: **08.01.92**

(51) Int. Cl.⁵: **G11B 15/467**, G11B 27/00, G11B 15/18

(21) Application number: **83305227.7**

(22) Date of filing: **07.09.83**

(54) **A capstan servo with a reference locked tape speed override for a video tape recorder.**

(30) Priority: **17.09.82 US 419631**

(43) Date of publication of application:
**25.04.84 Bulletin 84/17**

(45) Publication of the grant of the patent:
**08.01.92 Bulletin 92/02**

(84) Designated Contracting States:
**AT CH DE FR GB LI NL SE**

(56) References cited:
**EP-A- 0 091 187**
**US-A- 4 358 798**

**PATENTS ABSTRACTS OF JAPAN, vol. 6, no. 251 (E-147)[1129], 10th December 1982; & JP-A-57 148 481 (SONY K.K) 13-09-1982**

**IBE INTERNATIONAL BROADCAST ENGINEER, vol. 12, no. 176, March 1981, pages 18-26, Eton, Berkshire, GB; LEE V. HEDLUND: "The TR-800 VTR- a computer-based total system design"**

**PATENTS ABSTRACTS OF JAPAN, vol. 6, no. 82 (P-116)[960], 20th May 1982; & JP-A-57 19**

**803 (TOKYO SHIBAURA DENKI K.K.) 02-02-1982**

(73) Proprietor: **AMPEX CORPORATION**
**401 Broadway M.S. 3-35**
**Redwood City California 94063-3199(US)**

(72) Inventor: **Williams, Marshall**
**35900 Turpin Way**
**Fremont California(US)**
Inventor: **Rodal, David R.**
**3360 Kenneth Drive**
**Palo Alto California(US)**

(74) Representative: **Horton, Andrew Robert Grant et al**
**BOWLES HORTON Felden House Dower Mews High Street**
**Berkhamsted Hertfordshire HP4 2BL(GB)**

## Description

This invention relates generally to broadcast quality video tape recorders. More particularly, this invention relates to apparatus for selectively expanding or compressing the playback time of a prerecorded video tape with respect to the normal reproducing time.

Video recording and reproducing apparatus, particularly apparatus that record and reproduce video information of broadcast quality, are extremely complex, containing sophisticated electronic and mechanical components and systems. They require an extraordinary level of sophistication to provide the amount of control necessary to operate reliably in conformance with broadcast quality standards. Such apparatus accordingly have a number of servo systems to control their operation, including a servo system which controls the rotation of the tape guide scanning drum carrying the rotating video recording and reproducing transducers or heads, a servo system which controls the tape reel drive motors that drive the tape supply and take-up reels, a servo system that controls the tracking position of a movable head, a servo system that controls the correction of the timing of the reproduced video signal, usually called a time base corrector, and a capstan servo system which controls the speed at which the tape is transported. The servo systems often operate under microprocessor control.

Recently developed recording and reproducing apparatus include a head tracking position servo system which controls a movable element carrying the video reproducing head (or heads) mounted on a rotating tape guide scanning drum. The movable element is controlled to have the reproducing head follow a recorded video track in a manner permitting broadcast quality reproducing during special effects reproducing operations, i.e., when the tape is being transported at a speed other than the speed at which it was transported during recording. The movable element controlled by a head tracking position servo moves the head transversely with respect to the direction of the recorded video track so that the head follows the recorded track accurately and produces a quality signal whether the tape is being transported faster than normal record speed, resulting in a fast motion effect, or slower than normal record speed, resulting in a slow motion effect or even when the transport of the tape is stopped, resulting in a stop motion (still frame or field) effect.

One very desirable feature that has not been available in prior art video tape recording and reproducing apparatus is the capability of providing asynchronous reproduction so that precise time expansion or compression of a segment of recorded video information, sometimes referred to herein as a program, can be accomplished. Time expansion or compression is achieved by altering the speed of the transport of the tape from the normal record and reproduce speed to reproduce a particular length of recorded video information over a longer or shorter interval and occassionally repeating or skipping the reproduction of a recorded track to effect such expansion or compression.

When the tape speed is so altered, it is highly desirable to have the recording and reproducing apparatus servo locked to the system timing reference in order to provide accuracy in expanding and compressing playback time. Such servo locking is also highly desirable, if not essential, when a recorded video information signal that is compressed or expanded in time is reproduced from a recording made by a different video recording and reproducing apparatus because of physical variances in the transport mechanisms, which lead to time variations in the reproduced video information.

Also, if the tape is being transported at a speed other than the normal record and reproduce speed, a slight degree of mistracking occurs and, for program expansion or compression, an occasional repeat or skip of the reproduction of a recorded field of video occurs, which means that a head tracking position servo system is virtually a requirement for providing broadcast quality reproduction of the recorded video information under such circumstances.

Existing systems are known that provide asynchronous playback to time compress or expand a program without the video record and reproduce apparatus being servo locked to the system timing reference, the amount of time compression or expansion being designated by dialing in a percentage of program figure. The percentage figure represents the desired percentage of time by which the program length is to be varied. Such systems are undesirable for broadcast use, because the failure to servo lock the reproduction of the video information signal to the system timing reference results in the alteration of the selected time expansion or compression of the program. This is caused by the commonly occuring perturbations in the operation of the apparatus that introduce timing errors into the reproduced video information. Also, such systems require computations by the operator to determine the correct percentage. The necessity of such computations produces the possibility of errors that could have disastrous consequences in a commercial broadcast because of erroneous program length.

Accordingly, it is an object of the present invention to provide an improved servo system for the control of the transport of tape in a recording and reproducing apparatus, which reliably accom-

2

plishes accurate and effective asynchronous playback at tape transport speeds other than normal playback speed. Another object of the present invention is to provide an improved video tape transport control servo system suitable for asynchronous playback which permits an operator to specify the desired time compression or expansion of segments of video information precisely in time units without the necessity of computations. Yet another object of the present invention is to provide an improved video tape transport control servo system that eliminates interchange timing variations, i.e. timing variations resulting from the reproduction of video information by a video recording and reproducing apparatus other than the apparatus that recorded the video information.

It is known from International Broadcast Engineer Volume 12 (1981) March No.176 pages 18-26 to provide a capstan servo for moving video tape with variable speed during reproducing, the capstan servo being arranged to respond to a feedback control signal indicative of the tape speed during reproducing and a reference signal to provide a drive signal to a motor for the capstan. The reference signal is provided by a speed synthesizer loop which includes a voltage controlled oscillator of which the output is divided in frequency by a programmable divider which is controlled by a numerically specified speed signal.

EP-A1-0091187, filed 25 February 1983 and published 12 October 1983, discloses a capstan servo for moving video tape with variable speed during reproducing, the capstan servo being arranged to respond to a feedback control signal indicative of the tape speed during reproducing and a reference signal to provide a drive signal to a motor for the capstan. The capstan servo has a programmable counter which counts a high rate clock signal. In a first, synchronous, mode of operation, the counter is loaded in response to the occurrence of an input vertical synchronizing signal and acts as a one-shot circuit to provide the required reference signal at the same frequency as, but with a phase delay relative to, the input synchronizing signal. In an asynchronous mode, when a program length is to be altered, the counter is loaded with a count corresponding to a desired period for the reference signal and acts as a free-running rate generator.

According to one aspect the invention provides a capstan servo for moving video tape with variable speed during reproducing, said capstan servo being arranged to respond to a feedback control signal indicative of the tape speed during reproducing and a reference signal to provide a drive signal to a motor for the capstan, the servo including a programmable counter which is clocked by a high rate clock and can be loaded with a count to provide the reference signal with a period determined by the loaded count and with a phase determined by the loading of the count, means for programming said counter with a first count corresponding to a first tape speed, means for generating a digital signal denoting a compression or expansion of a program time, means for converting said digital signal to a second count corresponding to a second tape speed and control means for loading said counter substantially synchronously with an occurrence of the particular phase of the reference signal provided by the counter, whereby to avoid initial substantial discontinuity in the reference signal when the counter is loaded with the second count.

According to another aspect the invention provides a capstan servo for moving video tape with variable speed during reproducing, said capstan servo being arranged to respond to a feedback control signal indicative of the tape speed during reproducing and a reference signal to provide a drive signal to a motor for the capstan, the servo including a programmable counter which is clocked by a high rate clock and can be loaded with a first count in response to an occurrence of an input synchronising signal so as to provide the reference signal with a frequency and phase in correspondence with an input synchronising signal and for programming said counter means with a second count which determines a different frequency for the reference signal, and control means operable to provide said second count to said counter substantially synchronously with an occurrence of the synchronising signal, whereby to avoid substantial initial discontinuity in the said reference signal, and to allow the counter thereafter to produce the reference signal asynchronously relative to the said synchronising signal.

Other objects and advantages will become apparent from the following detailed description accompanied by the attached drawings.

DESCRIPTION OF THE DRAWINGS

FIG. 1 is a functional block diagram illustrating the microprocessor controlled video reproducing apparatus locked to the system timing reference exemplifying the present invention;
FIG. 2 is a functional block diagram of the capstan servo and control shown as a block in FIG. 1;
FIG. 3 is a functional block diagram of the controller portion as associasted with the capstan servo system portion of the capstan servo and control, which is shown as a block in FIG. 2;
FIG. 4 is a circuit diagram of the controller portion of the capstan servo system shown functionally in FIG. 3.

DESCRIPTION OF THE APPARATUS

A microprocessor may be utilized in an exemplary construction embodying principles of the present invention to control servos of video recording and reproducing apparatus and, by virtue of that control, to provide asynchronous playback of recorded video information, with the reproduction of the video information servo locked to the system timing reference. Thus, an operator located at the recording and reproducing machine itself, or remotely, if desired, can input a number indicating units of required time compression or expansion of the recorded program length. For example, it is possible to compress the recorded program length to provide an additional 10 or 20 seconds of time at the end of a program to facilitate insertion of additional commercials. The 10 or 20 second time compression is accomplished by merely transporting the tape at an appropriately higher speed so that a identified segment of recorded video information is reproduced in a shorter interval than that required to record the segment. This provides the additional 10 or 20 seconds for inserting additional program material without requiring the removal, by editing, of reproduced video information required. Such time compression, or corresponding expansion, effects are accomplished very accurately because control track lock of the transport of the tape is maintained even though the tape is transported at a speed different from the normal reproduce tape speed. By maintaining control track lock, no deleterious variation in the transport of the tape occurs.

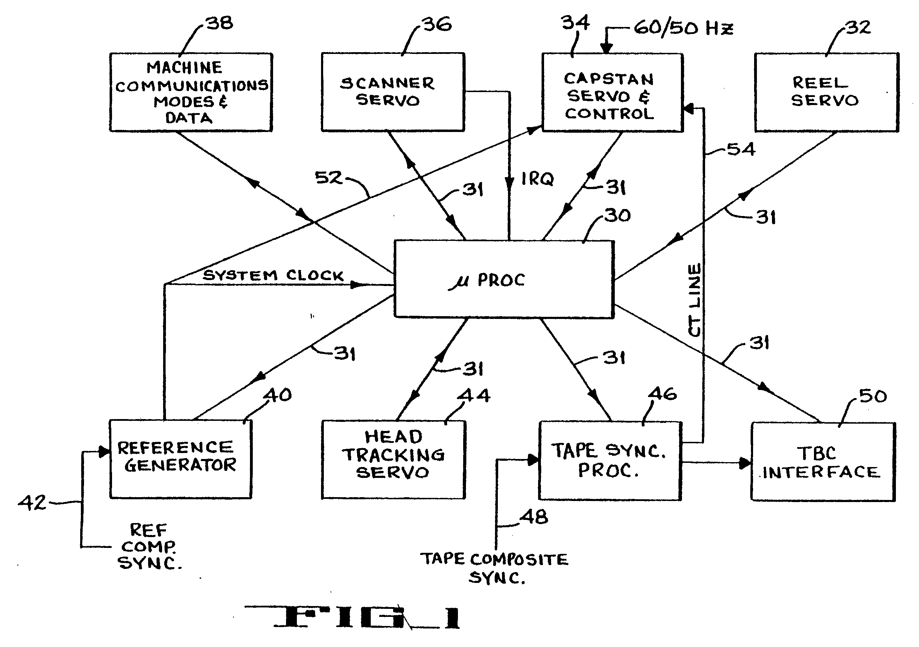

Turning initially to the block diagram of FIG. 1, there is shown a microprocessor 30 which is interconnected by a data bus 31 with a reel servo 32, a capstan servo and control 34 which includes a tape speed override feature in accordance with the present invention, a scanner servo 36 and a machine communication and data interface 38, which essentially controls the various modes of the recording and reproducing apparatus through operator manipulation of suitable machine operator controls.

The microprocessor 30 also interacts with a reference generator 40, which receives, as an input thereto, a system timing reference station composite sync signal via line 42. The reference generator generates system clocks, which clock the microprocessor 30, which in turn synchronizes the clock timing of the servos and other circuitry of the video recording and reproducing apparatus. The microprocessor 30 also interacts with an automatic head tracking position servo 44 and a tape sync processor 46, which has a tape composite sync signal input via line 48. The automatic head tracking position servo 44 functions to control the video head tracking position relative to the tape as the video information is reproduced therefrom. The tape sync processor 46 additionally provides a signal to a time base corrector interface 50, which operates to provide appropriate timing and control signals for use by a time base corrector. The time base corrector processes the timing and control signals to provide a broadcast quality video image having the requisite stability and vertical position with respect to system reference, as well as the correct chroma information. The processing varies in accordance with the reproducing mode of the apparatus.

The reference generator 40 provides system timing reference signals to the capstan servo and control 34 over timing lines 52, which includes a reference vertical sync, VREF, and a clock signal, 128H, at a rate of 128 times the reference horizontal sync frequency, both derived in a conventional fashion from the reference station composite sync signal present on line 42. The capstan servo and control 34 also receives control track signals over a CT line 54 reproduced from the tape and processed conventionally by the tape sync processor 46.

The apparatus is programmed to operate in various operating modes as is described in more detail in EP-0091187 entitled Microprocessor Controlled Reproducing Apparatus Having Asynchronous Reproducing Capability. Once the machine is initialized, a mode is selected, which may include stop, record, variable motion reproduce, stop motion (still frame or field) reproduce, ready, normal play, tape shuttle and tape speed override.

Mode selection is made by an operator with the aid of an interactive CRT terminal included in the machine communication and data interface 38. Upon selection of the tape speed override, or TSO, mode, the interactive CRT terminal asks the operator to specify whether the desired mode is a time expansion or a time compression mode. After that selection is made, the interactive CRT terminal asks the operator to input the number of seconds of change desired per hour of program in real program time. Alternatively, in another embodiment, the operator is permitted to specify the total real time of the program to be reproduced in the selected mode and the total number of seconds of program length change desired. In either embodiment, however, the operator input is made in units of time, whether it be in seconds, minutes, hours or some combination of such time units.

If the input specifies both total real program time and total seconds of program length change desired, the microprocessor 30 is programmed to reduce the two numbers to a standard basis, e.g., seconds change per hour of real time. The numerical value of the desired change, expressed in the standard basis, is then transmitted over the data bus 31 to the capstan servo and control 34 where it is stored as a standardized compression or expansion modified time period signal. The sign associated with the modified time period signal is assigned according to a pre-established convention depending, respectively, whether expansion or compression is selected by the operator. The capstan servo and control 34 is accordingly provided with input means, such as a multibit strobed flip-flop storage arrangement, for the input of the modified time period signal.

The TSO feature can only be selected when video recording and reproducing apparatus is in the playback mode of operation. Ordinarily, when in that mode, the tape reproduces control track signals from the tape, which are used for synchronization of the reproduction of the video information relative to the system timing reference. The control track signals are recorded on the tape in a fixed position relationship relative to the recorded video information to indicate the location, including the start, of each field of video information on the tape. The rate at which control track signals are reproduced also indicates, with high precision, the speed of the transport of the tape in the apparatus.

Control track servo lock in the embodiment illustrated in FIGS. 1-4 is obtained with the assistance of a programmable counting means such as a binary counter. The counter is clocked by the 128H high rate clock signal generated from reference station composite sync signal by the reference generator 40 and provided to the counter over line 52. Additionally, during normal operation without TSO, the counter will be synchronized with a vertical sync rate reference signal obtained from the reference station composite sync signal and provided by the reference generator. Accordingly, the counter can be operated to provide at its carry output a signal substantially in phase with the vertical sync rate reference signal, which may be determined by either the rising or falling, i.e., complementary, transitions of the signal. In the preferred embodiment of the present invention, the rising transition is of the reference vertical sync rate signal selected as the phase reference point.

When the TSO mode is activated by a signal on a sync/async select line, the synchronizing vertical reference signals are blocked from the counter and the counter presets in accordance with the stored modified time period signal. The counter thereafter is clocked by the high rate 128H signal to provide at its carry output a signal whose phase is determined by its preset, hence, modified time period signal. The counter's output will in general, therefore, no longer be in phase with vertical sync rate reference. The first carry output pulse from the counter when entering this operating mode will, however, be arranged to occur almost exactly simultaneously with the phase reference determining transition of the vertical sync rate reference signal. As a consequence there will be no noticeable video or audio disturbance when the TSO operating mode is entered.

Presetting of the counter requires a conversion of the stored modified time period signal to a binary number which is placed on the counter data pins. The binary number is such that when the modified time period signal is zero, i.e., no timing expansion or compression, the output of the counter is at the studio vertical reference frequency and phase. Conversion may be conveniently accomplished with the aid of a read only memory, or ROM. If, for example, a capability is desired to effect program time changes of up to ± 511 secs. per hour of real program length in 1 sec. increments, then 1024 ROM addresses are required. Furthermore, it may be desirable to have a ROM useable with both NTSC and PAL systems; 2048 ROM addresses are then needed. Hexadecimal ROM addresses 000 to 3FF may accordingly correspond, respectively, to NTSC modified program time changes of -511 to +511 seconds per hour. Addresses 400 to 7FF correspond, respectively, to the same range of PAL modified program time changes.

The contents of ROM storage, therefore, comprise presettable counts, or index quantities, at each of the foregoing addresses. The presettable counts may be determined from the formula

$$D = X + (K)(R) \qquad (1)$$

where D is the presettable count stored in ROM, X and K are constants to be described, and R is the modified time change in seconds. In the exemplary specific construction described herein, X takes the values 16,800 and 20,000 for NTSC and PAL, respectively. The constant, K, correspondingly, is 42/9 and 50/9. It is readily seen that R is just the ROM address less a displacement value according to whether a time compression or expansion is to be performed and whether the video information signal being reproduced from tape is a NTSC or PAL television signal. The presettable count D, which is representative of the selected modified program time change, is determined by a 16 bit binary number in the exemplary construction and is, therefore, resolvable to one part in about 64,000.

When the TSO mode is activated, therefore, the presettable count from an appropriate memory address is loaded into the binary counter. The counter repeatedly counts downward from the presettable count, issuing a carry pulse each time its count reaches zero. The carry pulse then generates a frequency controllable synthesized vertical sync signal which, upon entering the TSO mode, is essentially in phase with the phase reference determining transition of the reference vertical sync signal. After TSO activation, the controllable synthesized vertical sync signal has a frequency corresponding to the desired amount of program time expansion or compression.

The controllable synthesized vertical sync signal may assist in achieving control track lock by inputting into an appropriate error detecting means for comparison to the control track signal reproduced from the tape. The output of the error detecting means is an error signal indicating the phase and frequency difference between the controllable synthesized vertical sync signal and the reproduced control track signal. The error signal is coupled to a conventional capstan drive motor, which has a tachometer servo that responsively causes the capstan motor, and hence the transport of the tape to speed up or slow down to keep the aforementioned phase and frequency difference represented by the error signal substantially equal to zero.

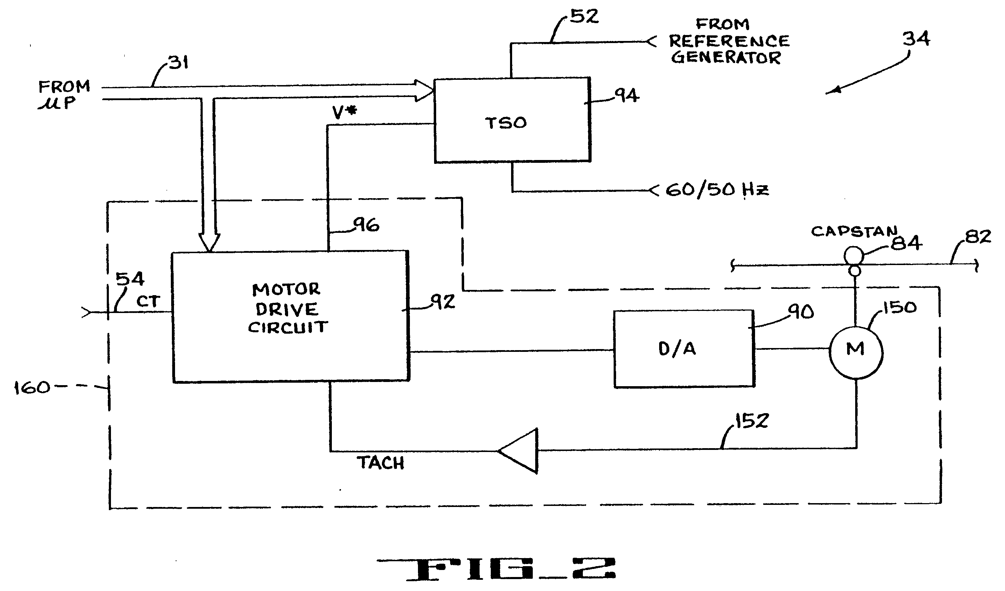

The exemplary specific construction embodying the foregoing principles may be seen in more detail in FIGS. 2-4.

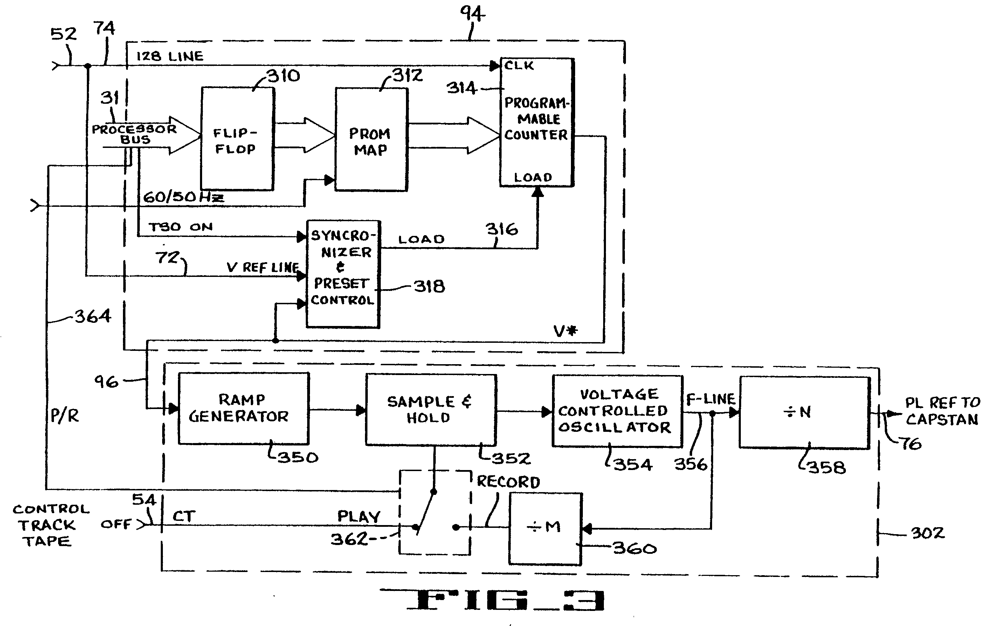

As shown in FIG. 2, the microprocessor exerts supervisory control over the capstan servo and control 34. FIG. 2 illustrates an idealization of a tape 82 driven by a capstan 84 powered by a motor 150, which in the specific exemplary construction is a permanent magnet DC motor. The motor speed and direction is determined by the output of a current source 90 featuring digital to analog conversion capability. The digital data to the current source 90 is provided by a motor drive circuit 92 responsive to operating mode selection signals on line 364 (FIG. 3) of the data bus from the microprocessor data bus 31 and speed control information from a TSO circuit 94 transmitted on a V* line 96. A capstan TACH line 152 from a capstan tachometer operatively associated with the motor 150 is fed to the motor drive circuit 92 to form a servo feedback loop, thereby making the motor, hence, tape speed responsive to the speed data provided on the V* line 96. The motor drive circuit 92 and motor 150 together with their associated connections thereby comprise a motor drive servo 160.

The timing lines 52 carry the vertical sync related signal on a VREF line 72 and the 128H high rate clock timing signal on a 128H line 74, as may be seen in FIG. 3. The vertical sync and horizontal line frequencies are different according to whether the system is operating in a 525 line NTSC mode or a 625 line PAL mode. Thus, the VREF line 72 carries a signal with a frequency of 59.94 Hz and 50.0 Hz in the NTSC and PAL modes, respectively. Correspondingly, the 128H line 74 carries signals with a frequency of 2.013986 MHz and 2.0 MHz in the NTSC and PAL modes, respectively.

The TSO circuit 94 is shown functionally in FIG. 3. It is comprised generally of a timing generator that cooperates with a control track error signal generator 302 that provides a tape speed related signal PLREF on line 76 coupled as the reference to the aforementioned capstan drive motor tachometer servo. The timing generator 94 receives the high rate 128H clock on the line 74 and the reference vertical sync related signal on line 72. It provides a V* timing signal on line 96 connecting the timing generator with the PLREF signal generator 302. The V* signal is the controllable vertical sync signal of the embodiment, related either to the reference vertical sync related signal or to the modified program time related signal provided by PROM memory 312, and is provided under all conditions of operation whether or not expansion and compression of the program time is desired. When expansion or compression is not to be performed, that is, the TSO circuit 94 is not enabled, the V* signal is related to the reference vertical sync related signal, which is coupled to the TSO circuit over the line 72. The PLREF signal generator 302 provides the PLREF signal on the line 76 to control the aforementioned capstan drive motor tachometer servo to cause the tape 82 to be transported at the normal speed.

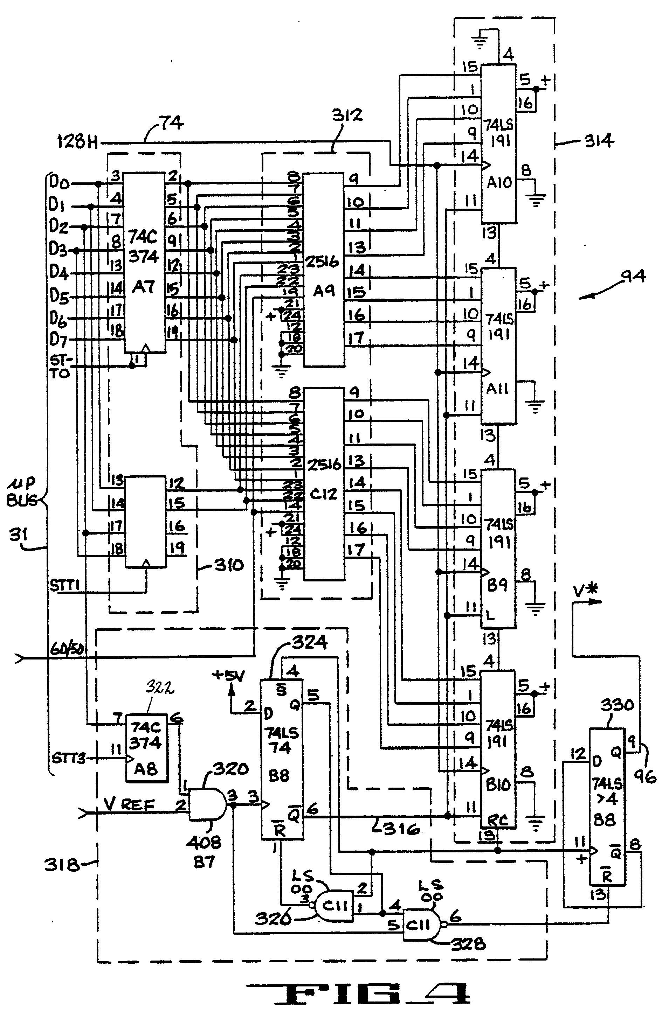

The TSO or timing generator 94 comprises an array of flip-flops 310 outputting 10 bits of data to the address pins of a PROM map 312, which in turn outputs 16 bits of data to the data pins of a programmable counter 314, the said bits corresponding to either a number selected to represent the reference sync related signal or a number related to the modified program time, as will be described with reference to FIG. 4. The array of flip-flops 310 provides storage for the digitized modified time period signals transmitted from the microprocessor 30 over data bus 31. The modified time period signals are transmitted in the form of 10 bits of data identifying addresses in the PROM map 312. An 8 bit microprocessor 30 must clock in the 10 bit address data in 2 stages, using data lines D0-D7 and strobe lines STT0 and STT1. The PROM map 312 is also addressed by a 60/50 select line from a machine contol, which indicates whether the video recording and reproducing apparatus is reproducing NTSC or PAL format television signals, and therefore, whether the NTSC or the PAL portion of the PROM map is to be addressed. The counter 314 is clocked by the 128H clock signal on line 74. The counter load pin 314-11 is controlled by load line 316 from a synchronizer and preset control 318. The reference vertical sync related signal on line 72 is coupled to the synchronizer and preset control 318 to provide synchronizing signals when TSO 94 modify program time mode is disabled. The reference vertical sync related signal is blocked by a logical low signal at an input to an AND-gate 320-1 when TSO modify program time mode is enabled. As may be seen in FIG. 4, TSO 94 is enabled and disabled by the output of a flip-flop 322-6 (i.e. pin 6 of flip-flop 322) according to whether a logical high or a low signal at input 322-7 is clocked by a rising strobe transition at the input 322-11. The data input to 322-7 is stored in flip-flop 322 from data line D2 of the data bus 31 upon the occurrence of the strobing transition. The strobe lines STT0 through STT3 are enabled at the appropriate times by an address decoder associated with the microprocessor 30 (FIG. 1) to effect the storage of data on the data bus 31 in the appropriate flip-flops of the array 310 and 322.

The AND-gate 320-3 is connected to a flip-flop clock pin 324-3. The Q output from flip-flop 324-5 is fed through a logic circuit comprising NAND-gates 326 and 328. The output from gate 328-6 controls a flip-flop reset pin 330-13. The Q output at flip-flop 330-9 generates the signal V* on line 96. The other input of the NAND-gate 328-5 connects to AND-gate output 320-3. The remaining NAND gate input 326-2 connects to flip-flop set input 324-4, flip-flop clock input 330-11 and counter carry output 314-13. The complementary Q* output from flip-flop 324-6 connects to the counter load pins 314-11. The Q* output from flip-flop 330-8 feeds back to the D input 330-12, making flip-flop 330 a divide-by-two counter. The D input 324-2 is tied to a logical high.

When TSO 94 is disabled, the microprocessor 30 outputs to the array of flip-flops 310 a number corresponding to a normal tape speed (i.e., no modification of program length) address in the PROM map 312. It also outputs a high to the flip-flop 322. The PROM map 312 responsively outputs a number on the data pins of counter 314 corresponding to a zero value of R in Eq. (1). The first rising transition of the reference vertical sync related signal on line 72 clocks a low onto the counter load pin 314-11, loading the counter. However, the output of NAND-gate 326-3 goes low immediately thereafter to reset flip-flop 324 and enable counter 314. The same rising reference vertical sync related signal transition also resets flip-flop 330 to put a logical low on the V* line 96. Thus, the falling transition of the V* signal provided to the PLREF signal generator 302 over line 96 is synchronized to the occurrence of the rising transition of the reference vertical sync related signal on line 72. The counter 314 will then count down from the number on its input data pins until it reaches zero, at which time a low transition will occur on the counter ouput 314-13. The time required for the countdown is arranged as nearly as possible to be one-half the time between the reference vertical sync related signal rising transitions on line 72. After counting to zero, the counter 314 sets flip-flop 324 to reload the counter 314 which begins its countdown once more, setting the V* line high.

It will be appreciated that if falling transitions on the counter output 314-13 are not exactly in synchronization with the rising transitions of the reference vertical sync related signal on line 72, then a rising transition on line 72 will cause the programmable counter 314 to reload and restart its countdown while simultaneously driving the output of the counter 314 low. In this way, the falling transitions on the V* line 96 are maintained in substantial synchronization with the rising transitions of the reference vertical sync related signal on line 72.

Referring again to Fig. 3, the PLREF generator 302 comprises a ramp generator 350 feeding a sample and hold circuit 352, which sets the voltage delivered to a voltage controlled oscillator 354, whose output is coupled to an F-line 356. The frequency on the F-line is divided by a divide by N counter 358, the output of which forms the control track error signal on the PLREF line 76. The output on the F-line 356 is also fed to a divide by M counter 360, which responsively outputs to a switch 362 controlled by a P/R line 364 a signal according to whether the apparatus is in a play or record mode. When the apparatus is in the play mode, reproducing recorded video information from tape 82 (Fig. 2), the switch 362 connects the sample and hold circuit 352 to the control track signal reproduced from the tape and coupled to the switch by the CT line 54. When the P/R line is impressed with a signal indicating the apparatus is in its record mode, the switch connects the sample and hold circuit 352 to the output of the divide by M counter 360.

Returning again to Fig. 4, TSO 94 is enabled when a logical low signal is placed on line D2 and the microprocessor 30 provides a rising strobe transition on line STT3 that clocks a logical low signal onto the flip-flop output 322-6, which disables AND-gate 320 to isolate flip-flop 324 from line 72. At about the same time, the microprocessor provides a strobe transition on line STT0 to clock a new modified time period signal into the array of flip-flops 310. When the counter 314 issues its next end of count output on pin 322-13 after TSO 94 is enabled, the new index quantity from the PROM map 312 is loaded into the counter. The counter then counts a time period determined by the new index quantity from the PROM map.

It is important to notice that the change in the operating condition of the counter 314 from a normal vertical sync signal output condition during an unmodified program length operating mode condition to a controllable synthesized vertical sync signal output condition during a modified program length operating mode condition is smooth. The mode transition occurs one count after a rising transition on the VREF line 72, thereby substantially preserving the phase relationship between the reference vertical sync related signal and the synthesized vertical sync signal when the mode transition occurs. The V* signal is accordingly synchronized to the occurrence of the vertical sync signal contained in the video information signal being reproduced from the tape 82 (FIG. 2) at the time the mode transition is made. The flip-flop 330, which divides the output of the counter 314 by two, provides the desired symmetrically shaped square wave output on the V* line 96 at the field rate frequency of operation of the video record and reproduce apparatus.

Referring again to Fig. 3, the V* signal from the timing generator 94 resets the ramp generator 350, which responsively initiates a ramp voltage having a sawtooth wave form. When the apparatus is in the playback mode of operation, each transition on the CT line 54 activates the sample and hold circuit 352, which responsively samples the voltage of the ramp signal generated by the ramp generator 350. It is evident that the sampled voltage will be proportional to the time delay between the transition on the V* line 96, which is a downward transition in the illustrated embodiment initiating the generation of the sawtooth ramp voltage by the ramp generator 350, and a rising transition of the control track signal on the CT line 54, which initiates the sampling of the generated ramp. Thus, the sample and hold voltage comprises an error signal responsive to the phase difference between the CT control track signal reproduced from the tape 82 and the V* signal on line 72. When the V* signal is synchronized to the occurrence of the CT control track signal reproduced from the tape 82, a zero error condition is output on the PLREF line 76. When V* signal is out of phase relative to the CT control track signal, a correcting error signal that is indicative of the phase difference is output on the PLREF line 76, which causes the tape transport speed to change to the speed corresponding to the new V* signal on line 96.

The output of the sample and hold circuit 352 (Fig. 3) is applied to the voltage controlled oscillator 354 which outputs a signal at a frequency of 32H on line 356 when the output of the sample and hold circuit corresponds to zero error. The output of the voltage controlled oscillator is fed via the F-line 356 to the divide by N circuit 358 where it is divided by 160 under normal playing conditions. Thus, in case of an NTSC operating mode, the divide by N circuit 358 will output a corresponding signal at a nominal frequency of approximately 3.15 KHz. The output of the divide by N counter comprises the PLREF signal on the PLREF line 76 to the capstan drive motor tachometer servo portion of the capstan servo 160 (FIG. 2). Of course, it is understood that the frequency of the signal on the PLREF line 76 will vary up or down in accordance with the error represented by the output voltage provided by the sample and hold circuit 352.

The 32H frequency signal is also fed to a divide-by-M circuit 360, which responsively divides it down to the vertical sync rate. The division is accordingly by a factor of 8400 in the NTSC operating mode and 10,000 in the PAL operating mode. The output of the divide-by-M counter replaces the CT line 54 input into the sample and hold circuit 352, when the system is operating in its record mode. It is readily seen that in the record mode the divide-by-M circuit forms a feedback loop to control the frequency of the oscillator 354 in accordance with the reference vertical sync related signal provided on the V* line 96.

It will of course be understood that modification of the present invention and its various aspects would be apparent to those skilled in the art, some being apparent only after study and others being a matter of routine design. For example, the described embodiment is adapted for use with a DC permanent magnet motor in the capstan servo. However, this is not a necessary feature of the invention. In an alternative embodiment, one might choose alternate means to drive the tape. Furthermore, a control track rate signal synthesized from the vertical sync signal extracted from the reproduced video information signal could be used in the capstan servo 160 in place of the control track signal, for example, as described in EP-A-0104023, entitled Synthetic Control Track Signal Producing Apparatus For Video Tape Machines, filed by us on the same date as this application and published on 28/03/84. It is to be appreciated, therefore, that the scope of the invention should not be limited by the particular embodiment and specific construction herein described, but should be defined only by the appended claims and the equivalents thereof.

## Claims

1. A capstan servo for moving video tape with variable speed during reproducing, said capstan servo being arranged to respond to a feedback control signal indicative of the tape speed during reproducing and a reference signal to provide a drive signal to a motor for the capstan, the servo including a programmable counter (314), which is clocked by a high rate clock and can be loaded with a count to provide the reference signal (V*) with a period determined by the loaded count and with a phase determined by the loading of the count, means (312) for programming said counter with a first count corresponding to a first tape speed, means (38) for generating a digital signal denoting a compression or expansion of a program time, means (310, 312) for converting said digital signal to a second count corresponding to a second tape speed and control means (320, 324) for loading said counter with the second count substantially synchronously with an occurrence of the particular phase of the reference signal provided by the counter, whereby to avoid initial substantial discontinuity in the reference signal when the counter is loaded with the second count.

2. A capstan servo according to claim 1 in which the control means (320, 324) is responsive to the production of the particular phase of the reference signal at the end of a period of counting by the counter to cause the reloading of the counter.

3. A capstan servo according to claim 2 in which the control means (320, 324) controls the loading of the counter (314) such that the counter is loaded with the first count in response to an occurrence of an input synchronising signal (Vref) and is loaded with the second count immediately after another occurrence of the synchronising signal, and the control means is operable to render the counting by the counter independent of the input synchronising signal when the counter counts with a period determined by the said second count.

4. A capstan servo for moving video tape with variable speed during reproducing, said capstan servo being arranged to respond to a feedback control signal indicative of the tape speed during reproducing and a reference signal to provide a drive signal to a motor for the capstan, the servo including a programmable counter (314) which is clocked by a high rate clock and can be loaded with a first count in response to an occurrence of an input synchronising signal so as to provide the reference signal (V*) with a frequency and phase in correspondence with an input synchronising signal (Vref) and means (312) for programming said counter means with a second count which determines a different frequency for the reference signal, and control means (320, 324) operable to provide said second count to said counter substantially synchronously with an occurrence of the synchronising signal, whereby to avoid substantial initial discontinuity in the said reference signal, and to allow the counter thereafter to produce the reference signal asynchronously relative to the said synchronising signal.

5. A capstan servo according to claim 4, further comprising means (38) for generating a digital signal denoting a compression or expansion of a program time and means (310, 312) for converting said specified time period to said second count.

6. A capstan servo according to any foregoing claim in which said means (312) for converting includes a memory containing a conversion table.

## Revendications

1. Asservissement de cabestan pour déplacer une bande vidéo avec une vitesse variable pendant la reproduction, ledit asservissement de cabestan étant conçu pour réagir à un signal de commande de contre réaction indicatif de la vitesse de défilement de la bande pendant la reproduction et à un signal de référence pour procurer un signal de commande pour un moteur de cabestan, l'asservissement comprenant un compteur programmable (314) qui est synchronisé par une horloge à vitesse élevée et qui peut être chargé avec un décompte pour délivrer le signal de référence (V*) avec une période déterminée par le décompte chargé et avec une phase déterminée par le chargement du décompte, des moyens (312) pour programmer ledit compteur avec un premier décompte correspondant à une première vitesse de défilement, des moyens (38) pour produire un signal numérique définissant une compression ou une expansion d'une durée de programme, des moyens (310, 312) pour convertir ledit signal numérique en un second décompte correspondant à une seconde vitesse de défilement et des moyens de commande (320, 324) pour charger ledit compteur avec le second décompte de manière sensiblement synchronisée avec l'apparition de la phase particulière du signal de référence fourni par le compteur, pour éviter par ce moyen une discontinuité initiale sensible dans le signal de référence lorsque le compteur est chargé avec le second décompte.

2. Asservissement de cabestan selon la revendication 1, dans lequel le moyen de commande (320, 324) est sensible à la production d'une phase particulière du signal de référence à la fin d'une période de comptage d'un compteur pour provoquer le rechargement du compteur.

3. Asservissement de cabestan selon la revendication 2, dans lequel le moyen de commande (320, 324) commande le chargement du compteur (314) de manière à ce que le compteur soit chargé avec le premier décompte en réponse à l'apparition d'un signal de synchronisation entré (Vref) et soit chargé avec le second décompte immédiatement après une autre apparition du signal de synchronisation, et dans lequel le moyen de commande est manoeuvrable pour rendre le comptage par le compteur indépendant du signal de synchronisation entré lorsque le compteur décompte avec une période déterminée par ledit second compteur.

4. Asservissement de cabestan pour déplacer une bande vidéo avec une vitesse variable pendant la reproduction, ledit asservissement de cabestan étant conçu pour réagir à un signal de commande de contre réaction indicatif de la vitesse de défilement de la bande pendant la reproduction et à un signal de référence pour procurer un signal de commande pour un moteur de cabestan, l'asservissement comprenant un compteur programmable (314) qui est synchronisé par une horloge à vitesse élevée et qui peut être chargé avec un premier décompte en réponse à l'apparition d'un signal de synchronisation d'entrée de manière à délivrer le signal de référence (V*) avec une fréquence et une phase en correspondance avec un signal de synchronisation d'entrée (Vref) et des moyens (312) pour programmer lesdits moyens de compteur avec un second décompte qui détermine une fréquence différente pour le signal de référence, et des moyens de commande (320, 324) manoeuvrables pour délivrer ledit second décompte audit compteur sensiblement de manière synchronisée avec une apparition du signal de synchronisation, pour éviter par ce moyen une discontinuité initiale substantielle dans ledit signal de référence, et pour permettre au compteur de produire par la suite le signal de référence de manière asynchrone par rapport audit signal de synchronisation.

5. Asservissement de cabestan selon la revendication 4, comprenant de plus un moyen (38) pour produire un signal numérique indiquant une compression ou une expansion d'une durée de programme et un moyen (310, 312) pour convertir ladite période de temps spécifiée en ledit second décompte.

6. Asservissement de cabestan selon l'une quelconque des revendications précédentes, dans lequel ledit moyen (312) pour convertir comprend une mémoire contenant une table de conversion.

### Patentansprüche

1. Capstan-Servoschleife zur Bewegung eines Videobandes mit variabler Geschwindigkeit bei Wiedergabe, welche auf ein ein Maß für die Bandgeschwindigkeit bei Wiedergabe darstellendes Rückkoppelregelsignal und ein Referenzsignal zur Erzeugung eines Treibersignals für einen Motor des Kapstans anspricht, mit einem programmierbaren Zähler (314), der durch einen hochfrequenten Takt getaktet wird und mit einem Zählwert geladen werden kann, um das Referenzsignal (V*) mit einer durch den geladenen Zählwert festgelegten Periode und einer durch die Ladung des Zählwertes festgelegten Phase zu erzeugen, Mitteln (312) zur Programmierung des Zählers mit einem einer ersten Bandgeschwindigkeit entsprechenden Zählwert, Mitteln (38) zur Erzeugung eines eine Kompression oder Expansion einer Programmzeit angebenden Digitalsignals, Mitteln (310, 312) zur Umsetzung des Digitalsignals in einen zweiten einer zweiten Bandgeschwindigkeit entsprechenden Zählwert und mit Steuermitteln (320, 324) zum Laden des Zählers mit dem zweiten Zählwert im wesentlichen synchron mit einem Auftreten der speziellen Phase des durch den Zähler erzeugten Referenzsignals, wodurch eine anfängliche ins Gewicht fallende Diskontinuität im Referenzsignal vermieden wird, wenn der Zähler mit dem zweiten Zählwert geladen wird.

2. Capstan-Servoschleife nach Anspruch 1, bei der die Steuermittel (320, 324) auf die Erzeugung der speziellen Phase des Referenzsignals am Ende einer durch den Zähler ausgeführten Zählperiode ansprechen, um das Neuladen des Zählers auszulösen.

3. Capstan-Servoschleife nach Anspruch 2, bei der die Steuermittel (320, 324) das Laden des Zählers (314) derart steuern, daß er als Funktion des Auftretens eines Eingangssynchronsignals (Vref) mit dem ersten Zählwert und unmittelbar nach dem Auftreten des Synchronsignals mit dem zweiten Zählwert geladen wird, und bei der die Steuermittel das Zählen durch den Zähler vom Eingangssynchronsignal unabhängig machen, wenn der Zähler mit einer durch den zweiten Zählwert festgelegten Periode zählt.

4. Capstan-Servoschleife zur Bewegung eines Videobandes mit variabler Geschwindigkeit bei Wiedergabe, welche auf ein ein Maß für die Bandgeschwindigkeit bei Wiedergabe darstellendes Rückkoppelregelsignal und ein Referenzsignal zur Erzeugung eines Treibersignals für einen Motor des Capstans angesteuert wird, mit einem programmierbaren Zähler (314), der durch einen hochfrequenten Takt getaktet wird und in Abhängigkeit eines Auftretens eines Eingangssynchronsignals derart mit einem ersten Zählwert geladen werden kann, um das Referenzsignal (V*) mit einer mit einem Eingangssynchronsignal (Vref) übereinstimmenden Frequenz und Phase zu erzeugen, mit Mitteln (312) zur Programmierung des Zählers mit einem zweiten eine andere Frequenz für das Referenzsignal festlegenden Zählwert und mit Steuermitteln (320, 324) zur Erzeugung des zweiten Zählwerts für den Zähler im wesentlichen synchron mit einem Auftreten des Synchronsignals, wodurch eine ins Gewichts fallende anfängliche Diskontinuität im Referenzsignal vermieden und dem Zähler die Möglichkeit gegeben wird, danach das Referenzsignal asynchron zum Synchronsignal zu erzeugen.

5. Capstan-Servoschleife nach Anspruch 4 mit Mitteln (38) zur Erzeugung eines eine Kompression oder Expansion einer Programmzeit angebenden Digitalsignals und mit Mitteln (310, 312) zur Umsetzung der spezifierten Zeitperiode in den zweiten Zählwert.

6. Capstan-Servoschleife nach den vorhergehenden Ansprüchen, in der die Umsetzungsmittel (312) einen eine Umsetzungstabelle enthaltenden Speicher enthalten.

FIG_1

EP 0 106 500 B1

FIG_2

EP 0 106 500 B1

FIG_3

FIG. 4